# EUROPÄISCHE PATENTSCHRIFT

(11) **EP 3 737 714 B1**
(45) Veröffentlichungstag und Bekanntmachung des Hinweises auf die Patenterteilung: **10.11.2021**
(21) Anmeldenummer: 19700230.6
(22) Anmeldetag: 11.01.2019
(51) Int. Cl.: C08L 3/02

(54) **THERMOPLASTISCHE STÄRKE**
THERMOPLASTIC STARCH
AMIDON THERMOPLASTIQUE

(30) Priorität: 11.01.2018 EP 18151223
(43) Veröffentlichungstag der Anmeldung: 18.11.2020
(73) Patentinhaber: Agrana Beteiligungs- Aktiengesellschaft, 1020 Wien (AT)
(72) Erfinder: FAHRNGRUBER, Barbara, 3430 Tulln (AT); WASTYN, Marnik Michel, 3430 Tulln (AT); KOZICH, Martin, 3430 Tulln (AT)
(74) Vertreter: SONN Patentanwälte OG
(86) Internationale Anmeldenummer: PCT/EP2019/050604
(87) Internationale Veröffentlichungsnummer: WO 2019/138022

(56) Entgegenhaltungen:
- WO-A1-2006/042364
- WO-A1-2012/162092
- DE-A1- 19 822 979
- DE-A1-102007 050 770
- US-A1- 2014 272 370

## Beschreibung

Die vorliegende Erfindung betrifft ein Verfahren zur Herstellung von thermoplastischer Stärke, eine derartig hergestellte thermoplastische Stärke, ein Compound enthaltend die thermoplastische Stärke sowie eine aus diesem Compound hergestellte Folie.

Nach der Definition von Carvalho handelt es sich bei thermoplastischer Stärke (im Folgenden auch TPS genannt) um ein amorphes- oder semikristallines Material, bestehend aus aufgeschlossener oder destrukturierter Stärke und einem oder mehreren Weichmachern. TPS kann wiederholt in den plastischen Zustand überführt und wieder ausgehärtet werden, wodurch eine Formgebung unter Einwirkung von Hitze und Scherung möglich ist, was eine Verarbeitung mittels Techniken der Kunststoffindustrie erlaubt. TPS als Werkstoff besitzt üblicherweise hydrophilen Charakter, was eine starke Abhängigkeit der Materialeigenschaften von den klimatischen Umgebungsverhältnissen bedingt. Aus diesem Grund erfolgt nur selten der direkte bzw. alleinige Einsatz von TPS für die Herstellung von Biokunststoffen. Die Verwendung von fein verteilter TPS (disperse Phase) in einer Polymermatrix (kontinuierliche Phase) bietet hingegen die Möglichkeit a) den biobasierten Anteil in Kunststoffformulierungen erheblich zu erhöhen sowie b) in Abhängigkeit von der Wahl des Matrixpolymers eine biologisch abbaubare Komponente zu integrieren. Materialien an welche die Anforderung nach einer vollständigen biologischen Abbaubarkeit oder Kompostierbarkeit gestellt werden (z.B. nach Norm EN 13432), erfordern den Einsatz einer Polymermatrix, welche in biologischem Medium sowie unter Einwirkung von Wasser durch den Einfluss von Mikroorganismen zersetzt werden kann.

Thermoplastische Polymere können durch Temperaturerhöhung wiederholt aufgeschmolzen werden. Nach dem Abkühlen liegen sie in vorwiegend kristalliner oder amorpher Struktur vor. Diese Eigenschaft wird zum Zwecke der Formgebung genutzt und funktioniert aufgrund der Tatsache, dass die Glasübergangstemperatur (Tg) von Thermoplasten unter der Raumtemperatur liegt. Native Stärke zeigt dieses Verhalten nicht. Bei der Verarbeitung zu einem thermoplastischen Werkstoff wird die ursprünglich semikristalline, körnige Struktur aufgebrochen um eine kontinuierliche amorphe Phase zu erzeugen und so Stärke einer Formgebung mit konventionellen Kunststoffverarbeitungsmethoden zugänglich zu machen. Beim Erhitzen über die Verkleisterungstemperatur beginnt Stärke in Gegenwart von Wasser zu quellen. Dabei diffundiert Flüssigkeit in das Innere der Körner und interagiert schließlich mit den freien Hydroxygruppen der Stärkemoleküle. Dadurch werden die Wasserstoffbrückenbindungen gebrochen, das Material verliert an Kristallinität und schließlich beginnen amorphe Bereiche in Lösung zu gehen. Der Prozess wird im Wesentlichen durch den Temperaturverlauf bestimmt. Bis zu einem Schwellenwert von ca. 50 °C ist der Vorgang reversibel. Bei weiterer Erwärmung setzt irreversibel starke Quellung ein. Der Verlust an Kristallinität führt dazu, dass die Stärkekörner ihre Zwiebelschalenstruktur und die unter dem Mikroskop erkennbare Doppelbrechung verlieren und die Viskosität der Suspension rapide ansteigt. In einem Extrusionsprozess werden neben Wasser auch Weichmacher zugesetzt, um den Aufschluss der Stärke unter diesen wasserlimitierten Bedingungen zu erreichen. Durch den Einsatz von Weichmachern wie Glycerin, Sorbit, Erythrit, Polyethylenglycol, unterschiedlichen Mono- und Disacchariden oder Zuckeralkoholen werden, analog der Wirkung von Wasser, zwischenmolekulare Wechselwirkungen durch das Aufbrechen der Wasserstoffbrücken zwischen den Stärkemolekülen reduziert. Der Vorgang im Extruder wird von einer Aufspaltung der Polymerketten und somit einer teilweise stattfindenden Depolymerisation begleitet, wodurch sowohl die Schmelz- als auch die Glasübergangstemperatur bis unter die Degradationstemperatur (230 °C) sinken.

Aus der US 5,362,777 ist die Herstellung thermoplastischer Stärke (TPS) unter Zumischung von Weichmachern, z.B. Sorbit bzw. Sorbitol, bekannt, zur Verbesserung der Fließeigenschaften können auch Pflanzenfette hinzugegeben werden.

Die WO 99/61524 betrifft eine Folie aus einem thermoplastischen Polymergemisch, enthaltend TPS, mindestens ein Polyesterurethan, einen Weichmacher wie z.B. Sorbit, sowie als Gleitmittel Epoxygruppen enthaltende Öle, insbesondere epoxidiertes Leinöl.

Die DE 198 24 968 A1 offenbart ebenfalls eine Folie aus einem thermoplastischen Polymergemisch, enthaltend TPS, mit einem durch Polykondensation oder Polyaddition erhältlichen Polymer, enthaltend Weichmacher, z.B. Sorbit, sowie als Gleitmittel pflanzliche Fette oder Öle.

Gemäß der WO 2012/162085 A1 werden TPS, Öl und/oder Wachs (epoxidiertes Pflanzenöl, bzw. Leinöl) geoffenbart. TPS ist ein Ausgangsprodukt, zwingend nötig für die Verarbeitung von thermoplastischer Stärke ist die Anwesenheit eines weiteren thermoplastischen Polymers.

Die WO 2006/042364 A1 schließlich offenbart eine Mischung aus Sorbit und weiteren Weichmacher, z.B. epoxidiertem Leinöl. Stärke ist ein Ausgangsprodukt, abgesehen von der Stärke liegt noch ein wasserlösliches Polymer vor, z.B. Polyvinylalkohol, Polyvinylacetat oder Copolymere von Ethylen- und Vinylalkohol.

Die aus dem oben genannten Stand der Technik bereits bekannte TPS ist, trotz des Zusatzes an Weichmachern, inhärent brüchig und hydrophil. Somit können bei der Verwendung reiner TPS die hohen Anforderungen (Festigkeit, Wasserbeständigkeit), wie sie an technische Produkte in der Folienextrusion gestellt werden, nicht abgedeckt werden. Im Speziellen ist es schwierig dem Vergleich mit synthetischen Polymersystemen, in Punkto Verarbeitbarkeit und Endprodukteigenschaften (Dehnbarkeit, Zugfestigkeit), standzuhalten. Darüber hinaus hat sich gezeigt, dass wenn der Ansatz der Compoundherstellung auf der Basis von Glycerin-plastifizierter, nicht-reaktiv funktionalisierter TPS verfolgt wird, es im Zuge der technischen Umsetzung zu grundlegenden Problemen kommt.

Aufgrund von starken Viskositätsunterschieden ist eine feine Dispergierung von TPS in einer Polymermatrix nur unter hoher Schereinwirkung effizient (die TPS besitzt eine sehr hohe Viskosität, das Polymer dagegen tendenziell eine niedrige). Im Zuge dessen kann es zur einer mechanischen Schädigung der TPS Phase und einer damit einhergehenden Braunfärbung des Compoundmaterials kommen. Weiters führt die hohe Viskosität der unbehandelten TPS zu einer erschwerten Verarbeitbarkeit, welche sich in gesteigerten Drehmoment- und Druckverhältnissen im Extruder niederschlägt.

Außerdem ist die Verträglichkeit an den Grenzflächen zwischen der hydrophilen TPS und dem hydrophoben Polymer limitiert, dies führt zu einer Beeinträchtigung der mechanischen Werkstoffeigenschaften (Zugfestigkeit, Dehnbarkeit) im Endprodukt.

Sowohl bei der Flach- als auch bei der Blasfolienverarbeitung kommt es darüber hinaus ab einer Verarbeitungstemperatur von etwa 150°C zur Rauchentwicklung bzw. zur Entstehung von Glycerindämpfen. Die Temperatur muss, in Abhängigkeit vom zugesetzten TPS Anteil, in der Regel auf mind. 150°C angehoben werden, um der TPS-Polymer-Schmelze eine entsprechende Fließfähigkeit zu verleihen. Dies führt zu einem Verlust an Weichmachern im Werkstoff (und somit zu einer Verschlechterung der Qualität), sowie zur unerwünschten Kondensatbildung an den Anlagen-Kühlaggregaten.

Aufgrund des in der Stärke gebundenen Wassers kommt es am Düsenaustritt auch zu einer prozessabhängigen, mehr oder weniger starken Expansion der Polymerschmelze (Blasenbildung an der Oberfläche durch Ausweichen von Wasserdampf). Die ausschließliche Substitution von Glycerin mittels Weichmacher (Polyolen) höherer Molmasse wie z.B. Sorbitol, Isosorbid, oder Xylitol in der TPS führt, im Falle von Folienmaterialien auf der Basis TPS und Polymer, erwiesenermaßen zu Einbußen in Hinblick auf die erzielbaren mechanischen Werkstoffeigenschaften (Dehnbarkeit und/oder Zugfestigkeit, Weiterreißfestigkeit).

Die derzeitig am Markt erhältlichen TPS-Qualitäten lassen wegen mangelnder Kompatibilität zumeist einen Einsatz in einem Anteil von über 30-40 Gew. % im Compound bzw. in der Folie nicht zu, ohne dass die mechanischen Eigenschaften der Endprodukte (Folien) stark darunter leiden. Gewünscht wäre aber die Herstellung von Folien mit einem höheren Anteil (>40 Gew. %) an nachwachsenden Rohstoffen wie z.B. TPS.

Die DE 198 22 979 A1 offenbart Folien, hergestellt durch Extrudieren einer Mischung enthaltend thermoplastische Stärke und/oder ein thermoplastisches Stärkederivat, mindestens ein Polyesterurethan, Glycerin und epoxidiertes Leinöl. Säuren werden in Kombination von TPS mit einem Polyurethan als Vernetzungsmittel erwähnt.

Die WO 2012/162092 A1 offenbart die Herstellung thermoplastischer Stärke durch Extrudieren einer Mischung, enthaltend Stärke, Polyol und epoxidiertes Pflanzenöl.

Die Aufgabe der vorliegenden Erfindung ist es, die oben genannten Nachteile des Standes der Technik zu überwinden und eine TPS frei von Polyesterurethan zur Verfügung zu stellen, welche für die Herstellung von Compounds mit mindestens einem thermoplastischen Polymer geeignet ist, welches als Compound zur Herstellung von Folien mittels Blas- bzw. Flachfolienextrusion zum Einsatz kommen kann.

Diese Aufgabe wird erfindungsgemäß gelöst durch ein Verfahren zur Herstellung von thermoplastischer Stärke, bei welchem Verfahren eine Mischung umfassend Stärke und ein Polyol, vorzugsweise ausgewählt aus der Gruppe umfassend Polyethylenglykol, Mono- und Disacchariden, Zuckeralkoholen wie Glycerol, Sorbitol, Erythritol, Xylitol oder Mannitol und Mischungen hiervon, in einer Menge von 10 bis 25 Gew. % der Mischung und einem Epoxid, ausgewählt aus der Gruppe umfassend epoxidierte Pflanzenöle wie Sojabohnenöl, Leinöl, Sonnenblumenöl, Rapsöl und Mischungen hiervon, in einer Menge von 0,1 bis 6, bevorzugt 1 bis 4,5, besonders bevorzugt 2,5 bis 3,5 Gew. % der Mischung extrudiert wird, wobei die Mischung weiters eine Säure, vorzugsweise eine Carbonsäure ausgewählt aus der Gruppe bestehend aus Zitronensäure, Äpfelsäure oder Weinsäure, in einer Menge von 0,1 bis 1, vorzugsweise 0,1 bis 0,5 Gew. % der Mischung enthält und frei von Polyesterurethan ist. Bei der Erfindung handelt es sich um eine Rezeptur zur Herstellung thermoplastischer Stärke (TPS) mit, sowohl aus verarbeitungs- als auch aus werkstofftechnischer Sicht, optimiertem Eigenschaftsprofil. Als Ausgangsstoffe werden Stärke, ein Weichmacher (10-25 Gew. %), eine Säure (0,1-1 Gew. %) sowie ein epoxidiertes Pflanzenöl (0,1-6,0 Gew. %) eingesetzt. Das Endprodukt ist kaltwasserquellend bis kaltwasserlöslich. Für die Herstellung von dünnwandigen Folienmaterialien (im Bereich von z.B. 10-50 µm Dicke) gilt es, die TPS in der Compoundmatrix möglichst fein zu verteilen. Die erfindungsgemäß bei der Extrusion von Stärke zusammen mit einem Polyol und einem Epoxid eingesetzte Säure wirkt sowohl als Aktivierungsmittel für das Epoxid als auch als Verarbeitungshilfsmittel, da sie a) die Verzweigungsketten an Amylopektin kappt und somit den Anteil an linearen Molekülen steigert. Das Verhalten des Polymers wird somit jenem klassischer thermoplastischer Werkstoffe ähnlicher. b) Weiters geht im Zuge des Säurezusatzes eine Depolymerisation der Moleküle an der glykosidischen Bindung von statten. Die Auswirkung der Änderung von Prozessbedingungen wie Temperatur, Druck und Verweilzeit kann so besser abgeschätzt werden. Bewährt haben sich zu diesem Zweck zum Beispiel Carbonsäuren wie Zitronensäure, Äpfelsäure, Essigsäure oder Weinsäure. Bezüglich der angeführten Mengen ist zu sagen, dass Bereiche von kleiner 0,1 Gew. % in der großtechnischen Praxis kaum realisierbar sind, oberhalb von etwa 1 Gew. % kommt es (je nach eingesetzter Säure) zu einer drastischen Reduktion der Molekülmasse und damit einhergehende Eigenschaftseinbußen, einem starken Schäumen der Schmelze wodurch keine Granulierung mehr möglich ist sowie zu einer starken Staubentwicklung aufgrund von TPS-Abrieb. Überraschenderweise hat sich auch gezeigt, dass mit der erfindungsgemäß hergestellten thermoplastischen Stärke eine TPS-Partikelgröße von < 5 µm in der Polymermatrix erreicht werden kann, um die Entstehung einer Mikrorauheit (Folienoberfläche) und das Auftreten von damit einhergehenden mechanischen Schwachstellen zu vermeiden. Der Einsatz dieser TPS in der Form einer fein verteilten dispersen Compound-Phase in Kombination mit z.B. abbaubaren, thermoplastischen Polyestern (die kontinuierliche Phase) bietet eine einfache Möglichkeit zur Erhöhung der Feuchtebeständigkeit sowie zur Optimierung der Endprodukteigenschaften. So kann auch die biologische Abbaubarkeit des Endproduktes eingestellt werden. Der nachhaltige Charakter des Endproduktes kann durch den dadurch ermöglichten erhöhten Anteil an TPS gesteigert werden. Für das Epoxid hat sich gezeigt, dass die Aufnahmekapazität der Schmelze bei 6,0 Gew. % ausgeschöpft ist, eine höhere Zudosierung führt zu öligen Ablagerungen am Produkt bzw. am Equipment.

Vorzugsweise ist die Menge an Stärke in der erfindungsgemäß zum Einsatz kommenden Mischung der neben den anderen vorhandenen Inhaltsstoffen (Polyol, Epoxid und Säure) fehlende Rest auf 100 Gew. % der Mischung, wobei jedoch gegebenenfalls noch andere, dem Fachmann bekannte Hilfs- und Zusatzstoffe anwesend sein können. Jedenfalls ist die erfindungsgemäß zum Einsatz kommende Mischung frei von Polyesterurethan(en).

### Stärke:

Die erfindungsgemäß zum Einsatz kommende Stärke kann jede herkömmliche Knollen-, Getreide- oder Leguminose-Stärke sein, z.B. Erbsenstärke, Maisstärke, inkl. Wachsmaisstärke, Kartoffelstärke inkl. Wachskartoffelstärke, Amaranthstärke, Reisstärke, inkl. Wachsreisstärke, Weizenstärke, inkl. Wachsweizenstärke, Gerstenstärke, inkl. Wachsgerstenstärke, Tapiokastärke, inkl. Wachstapiokastärke, Sagostärke. Stärken natürlichen Ursprungs haben in der Regel einen Amylosegehalt von 20 bis 30 Gew. %, abhängig von der Pflanzenart, aus der sie gewonnen werden. Erfindungsgemäß gehören dazu auch amylopektinreiche Stärken, welche einen deutlich erhöhten Amylopektingehalt aufweisen, bzw. auch Produkte, welche einen erhöhten Amylosegehalt enthalten. Neben den natürlichen bzw. den durch Züchtungsmaßnahmen erhaltenen amylopektinreichen Stärketypen und Hochamylosetypen können auch über chemische und/oder physikalische Fraktionierung gewonnene bzw. über gentechnisch veränderte Pflanzen hergestellte amylopektinreiche bzw. hochamylose Stärken verwendet werden. Weiters zum Einsatz kommen können funktionalisierte Stärken, definiert wie folgt:

### Funktionalisierte Stärke:

Die erfindungsgemäß zum Einsatz kommende Stärke kann auch eine funktionalisierte Stärke sein, wenn in der vorliegenden Beschreibung und in den Ansprüchen der Begriff "Stärke" verwendet wird, wird darunter auch eine funktionalisierte Stärke verstanden. In den Bereich Funktionalisierung fallen z.B. Veretherungen oder Veresterungen. Im Folgenden werden einige Derivatisierungen beschrieben, die alleine oder in Kombination miteinander zur weiteren Derivatisierung der Stärkederivate vorgesehen werden können. Die Art der Derivatisierung und die Rohstoffbasis der verwendeten Stärke hängen sehr eng mit dem speziellen Einsatzbereich des jeweiligen Produktes zusammen. Die Methoden hierzu sind an sich bekannt. Im Speziellen soll der Fokus hier auf der Funktionalisierung im Slurry, im Kleister, (Semi)Trockenverfahren sowie der Funktionalisierung mittels Reaktivextrusion liegen.

Im Allgemeinen unterscheidet man bei Stärkederivaten zwischen Stärkeether und Stärkeester. Weiters kann zwischen nichtionischen, anionischen, kationischen und amphoteren als auch hydrophoben Stärkederivaten differenziert werden, welche sowohl über eine Slurry-, Kleister-, Halbtrocken- oder Trockenderivatisierung als auch über eine Derivatisierung in organischen Lösungsmitteln hergestellt werden können.

Unter anionischer und nichtionischer Funktionalisierung der Stärke werden jene Derivate zusammengefasst, bei denen die freien Hydroxylgruppen der Stärke durch anionische oder nichtionische Gruppierungen substituiert werden. Auch durch oxidative Prozesse wie bspw. die Behandlung der Stärke mit Wasserstoffperoxid oder Hypolauge oder durch ein Laccase/Mediator-System kann Stärke anionisch funktionalisiert werden.

Die anionische und nichtionische Derivatisierung lässt sich prinzipiell auf zwei Arten durchführen:
a) Durch die Funktionalisierung wird eine Veresterung der Stärke erzielt. Als Funktionalisierungsmittel dienen anorganische oder organische verschiedenwertige, meist zweiwertige, Säuren bzw. Salze davon bzw. Ester davon bzw. Anhydride davon. Auch gemischte Ester oder Anhydride können verwendet werden. Bei der Veresterung der Stärke kann diese auch mehrfach erfolgen, so dass beispielsweise Distärkephosphorsäureester hergestellt werden können. Vorzugsweise ist die erfindungsgemäß eingesetzte Stärke dabei das Resultat einer Veresterung mit Mono-, Di- oder Tricarbonsäuren mit einer Alkylkette mit 1 bis 30 Kohlenstoffatomen oder ein Carbamat, besonders bevorzugt acyliert, wie succinyliert, octenylsuccinyliert, dodecylsuccinyliert oder acetyliert.
b) Im Zuge der Funktionalisierung kommt es zu einer Veretherung der Stärke. Zum Einsatz kommen können Methyl-, Ethyl-, Hydroxyethyl-, Hydroxypropyl-, Hydroxybutyl-, Carboxymethyl-, Cyanoethyl-, Carbamoylethyl-etherstärke, oder Gemische davon. Unter kationischer Funktionalisierung der Stärken werden jene Derivate zusammengefasst, in der durch Substitution eine positive Ladung in die Stärke eingebracht wird. Die Kationisierungsverfahren erfolgen mit Amino-, Imino-, Ammonium-, Sulfonium- oder Phosphoniumgruppen. Solche kationischen Derivate enthalten bevorzugt stickstoffhaltige Gruppen, insbesondere primäre, sekundäre, tertiäre und quartäre Amine bzw. Sulfonium- und Phosphoniumgruppen, die über Ether- oder Esterbindungen gebunden sind.

Eine weitere Gruppe stellen die amphoteren Stärken dar. Diese enthalten sowohl anionische als auch kationische Gruppen, wodurch ihre Anwendungsmöglichkeiten sehr spezifisch sind. Meist handelt es sich um kationische Stärken, die entweder durch Phosphatgruppen oder durch Xanthate zusätzlich funktionalisiert werden.

Bei den Estern unterscheidet man zwischen einfachen Stärkeestern und gemischten Stärkeestern, wobei der (die) Substituent(en) des Esters verschiedenartig sein kann (können): Im Esterrest RCOO- kann der Rest R ein Alkyl-, Aryl-, Alkenyl-, Alkaryl- oder Aralkylrest mit 1 bis 20 Kohlenstoffatomen, vorzugsweise 1 bis 17 Kohlenstoffatomen, bevorzugt mit 1 bis 6 Kohlenstoffatomen, sein. Diese Produkte schließen die Derivate Acetat (hergestellt aus Vinylacetat oder Acetanhydrid), Propionat, Butyrat, Stearat, Phthalat, Succinat, Oleat, Maleinat, Fumarat und Benzoat ein.

Veretherungen erfolgen großteils durch Umsetzung mit Alkylenoxiden (Hydroxyalkylierung), die 1 bis 20 Kohlenstoffatome, vorzugsweise 2 bis 6 Kohlenstoffatome, insbesondere 2 bis 4 Kohlenstoffatome, enthalten, insbesondere durch Verwendung von Ethylen- und Propylenoxid. Es können aber auch Methyl-, Carboxymethyl-, Cyanethyl- und Carbamoylether hergestellt und verwendet werden. Als Beispiel für eine Carboxyalkylierung sei die Reaktion von Stärke mit Monochloressigsäure oder deren Salzen angeführt. Weiters seien speziell noch hydrophobierende Veretherungsreagenzien, wie Glycidylether oder Epoxide, genannt. Die Alkylkettenlänge der genannten Reagenzien liegt zwischen 1-20 Kohlenstoffatomen, darüber hinaus sind auch noch aromatische Glycidylether möglich.

Als Beispiel für eine Derivatisierung mit Glycidylethern seien o-Kresol-glycidether, Polypropylendi-glykolglycidether, tert-Butylphenylglycidether, Ethylhexyl-glycidether, Hexandiolglycidether und Neodekansäure-glycidester genannt.

Eine weitere Möglichkeit der Alkylierung besteht in der Alkylierung über Alkylhalogenide, beispielsweise über Methylchlorid, Dialkylcarbonate, z.B. Dimethylcarbonat (DMC) oder Dialkylsulfat z.B. Dimethylsulfat.

Die für die Veresterungen, Veretherungen und Vernetzungen verwendeten und auch die chemisch nicht-funktionalisierten Stärken können zudem über thermisch-physikalische Modifikationen getempert (im Slurry) oder inhibiert (Trocken- bzw. Halbtrockenreaktion) sein. Stärken können auch über Hydrophobierungsreagenzien funktionalisiert werden. Veretherte hydrophobe Stärken erhält man dabei, wenn die hydrophoben Reagenzien als funktionelle Gruppe ein Halogenid, ein Epoxid, ein Glycidyl, ein Halogenhydrin, eine Carbonsäure oder eine quaternäre Ammoniumgruppe enthalten. Für veresterte hydrophobe Stärken enthält das hydrophobe Reagens zumeist ein Anhydrid. Eine Hydrophobierung der Stärke kann auch über eine Abmischung einer Stärke oder eines Stärkederivates mit Fettsäureester erfolgen. All die genannten Funktionalisierungen der Stärke können nicht nur durch Umsetzung nativer Stärke erzielt werden, auch abgebaute Formen können zum Einsatz kommen. Die Abbauvorgänge können hydrolytisch (säurekatalysiert), oxidativ, auf mechanische, thermische, thermochemische oder enzymatische Weise erfolgen. Dadurch lässt sich die Stärke nicht nur strukturell verändern, die Stärkeprodukte können auch kaltwasserlöslich bzw. kaltwasserquellbar gemacht werden.

Schließlich kann die Stärke auch als Pfropf-Polymer oder als Pfropf-Copolymer vorliegen, wie beispielsweise mit Produkten aus der Gruppe der Polyvinylalkohole oder Polyester.

### Epoxidierte Pflanzenöle:

Aus chemischer Sicht handelt es sich bei den erfindungsgemäß zum Einsatz kommenden Epoxiden um zyklische Ether. Epoxide können mit den Hydroxygruppen der Stärke Interaktionen ausbilden. Zur Stoffgruppe der Epoxide zählen unter anderem auch die erfindungsgemäß zum Einsatz kommenden epoxidierten Öle, insbesondere Pflanzenöle. Aufgrund ihrer chemischen Struktur sind Epoxide instabil, d.h. die Ringstruktur wird geöffnet und kann mit der Stärke reagieren bzw. in Kombination mit z.B. Wasser zu einem Diol reagieren. Die Öffnung des Epoxidrings kann durch Säuren (z.B. Carbonsäuren) katalysiert werden. Vorzugsweise kommen erfindungsgemäß epoxidierte Pflanzenöle wie Sojabohnen- oder Leinöl (ESBO, ELO) zum Einsatz. Epoxidiertes Leinöl weist dabei bei 25 °C eine Viskosität von etwa 900 mPas sowie einen Epoxidsauerstoffgehalt von min. 8,5 Gew. % auf. Epoxidiertes Sojabohnenöl hingegen weist eine Viskosität von etwa 300-450 mPas (ebenfalls bei 25 °C) sowie einen Epoxidsauerstoffgehalt von 6,5-7,5 Gew. % auf. Die für den Zweck der vorliegenden Erfindung durchgeführten Viskositätsmessungen erfolgten jeweils in einem Viskosimeter gemäß EN ISO 3219.

### Polyole:

Gemäß einer bevorzugten Ausführungsform der vorliegenden Erfindung enthält die Mischung ein Polyol ausgewählt aus der Gruppe bestehend aus Sorbitol, Erythritol, Xylitol, Mannitol und Mischungen hiervon, in einer Menge von 10 bis 25 Gew. %. Diese Polyole sind in der TPS als Weichmacher so effizient (Interaktion mit Hydroxygruppen), dass die Verarbeitung im Prozessfenster (niedriger Druck, niedriges Drehmoment) erfolgen kann. Auch können die Polyole der TPS als Sirup (Lösung in Wasser) zugesetzt werden, was eine bessere Einmischbarkeit in die Schmelze bedingt, dies führt zu homogenerer TPS bzw. auch zu homogeneren Compounds und zu glatten Folien. Weiters haben diese Polyole gegenüber Glycerin den Vorteil, dass sie bei Raumtemperatur fest sind, bei der Verarbeitung hingegen als Schmelze vorliegen und damit plastifizierend wirken können.

Vorzugsweise enthält die Mischung als Polyol Sorbitol oder Erythritol in einer Menge von 10 bis 15 Gew. %.

Auch ist günstig, wenn die Mischung das Polyol in einer Menge von 13 bis 15 Gew. % enthält. Es hat sich gezeigt, dass der Anteil von Polyol als Weichmacher in der TPS nicht zu hoch sein soll, da es sonst zu potentiellen Problemen im Lebensmittelkontakt kommen kann.

Der Weichmacher könnte beispielsweise austreten, wenn er im Überschuss vorliegt, andererseits muss aber auch ein gewisser Prozentsatz an Weichmacher vorliegen um a) im Prozessfenster verarbeiten zu können (Druck, Drehmoment) und b) letztendlich die geforderten Folieneigenschaften zu erreichen (Dehnbarkeit, Zugfestigkeit).

Gemäß einer weiteren bevorzugten Ausführungsform der vorliegenden Erfindung ist vorgesehen, dass die Mischung Epoxid zu Polyol in einem Verhältnis von 1 zu 2 bis 1 zu 8, vorzugsweise 1 zu 4 bis 1 zu 6, besonders bevorzugt 1 zu 5, enthält. Im Bereich 1 zu 2 bis 1 zu 8 ist die TPS Verarbeitung gut (Druck, Drehmoment sowie Schneidbarkeit der Schmelze zur Herstellung von Granulaten) und es ist eine Steigerung in der Schüttdichte erkennbar. Ein Verhältnis von 1 zu 5 erfüllt letztendlich an der Folie alle geforderten Eigenschaften, nämlich eine Zugfestigkeit > 10 MPa und eine Dehnbarkeit > 300 %.

Weiters ist günstig, wenn die Mischung zusätzlich Milchsäure in einer Menge von 2 bis 9, vorzugsweise 4 bis 7, besonders bevorzugt 3,5 bis 4,5 Gew. % der Mischung enthält. Milchsäure begünstigt die Verarbeitbarkeit der TPS (Druck, Drehmoment), die Säure führt aufgrund ihrer Eigenschaften andererseits zu keinem signifikanten Abbau der Stärke, sodass ihre Eigenschaften somit erhalten bleiben. Außerdem ist in dem angeführten Konzentrationsbereich die Schmelze noch schneidbar.

Im erfindungsgemäßen Verfahren ist vorzugsweise vorgesehen, dass die Mischung bei einer Temperatur von 100-175 °C extrudiert wird, vorzugsweise in einem Doppelschneckenextruder und bei verringertem Druck im letzten Abschnitt des Extruders. Im angegebenen Temperaturbereich ist der Rohstoff bei kontinuierlicher Verarbeitung thermisch stabil, der Doppelschneckenextruder ermöglicht die effiziente Destrukturierung der Stärke (Aufbrechen der Kristallinität der nativen Stärke) durch Zwangsförderung. Ein verringerter Druck im letzten Abschnitt des Extruders ist zur Einstellung des Wassergehaltes am TPS-Produkt wichtig, dieser wirkt sich auf die Weiterverarbeitbarkeit aus und sollte möglichst zwischen 4-6 Gew. % liegen.

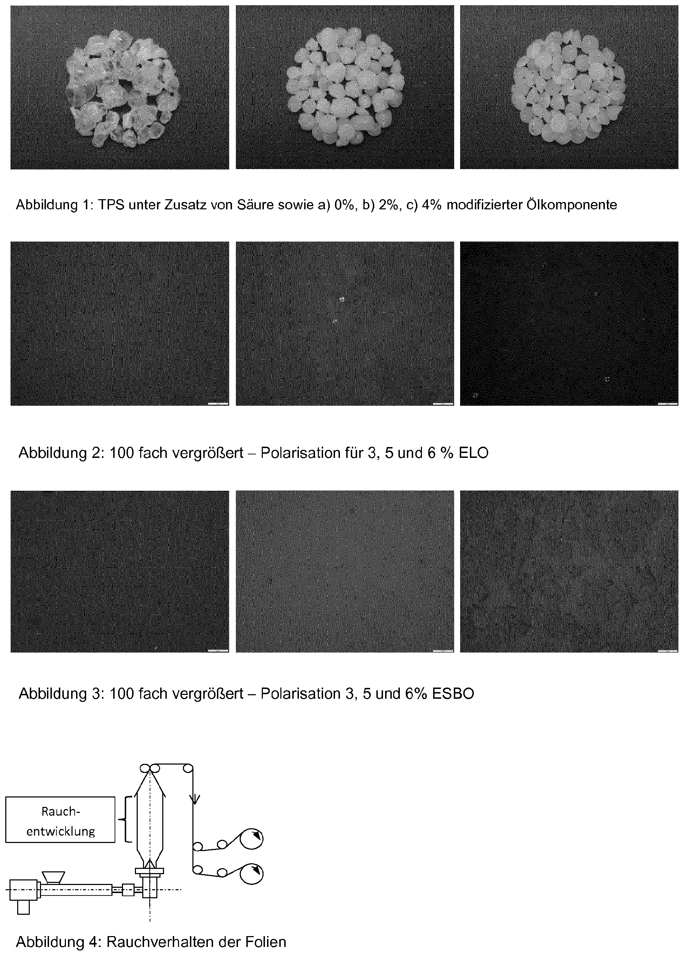

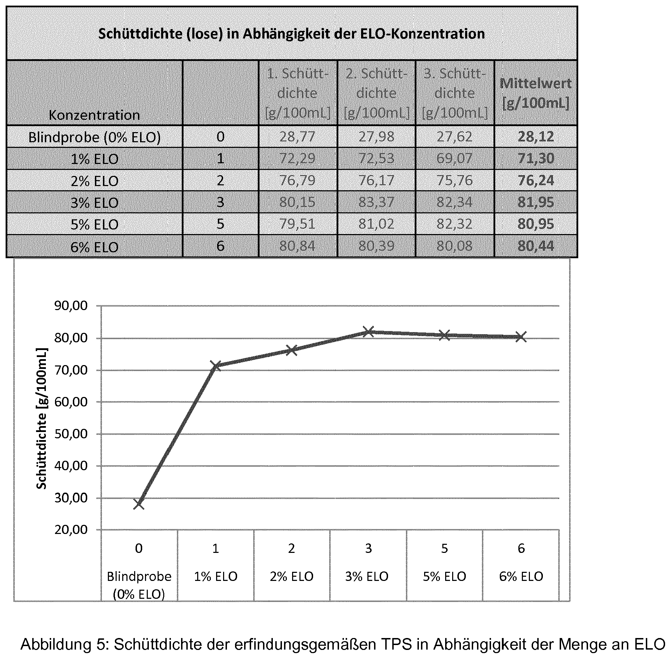

Die vorliegende Erfindung betrifft auch eine thermoplastische Stärke, erhältlich nach einem der oben geoffenbarten Verfahren, welche thermoplastische Stärke vorzugsweise eine Schüttdichte von 70 bis 85 g/100 ml aufweist. Damit ist die erfindungsgemäß hergestellte thermoplastische Stärke wesentlich dichter als eine ohne der erfindungsgemäßen Verwendung eines Epoxids zusammen mit einer Säure hergestellte TPS, dafür wird auch auf die beiliegende Abbildung 1 verwiesen, aus welchen diese Unterschiede deutlich sichtbar sind. Ermittelte Schüttdichten von erfindungsgemäß hergestellten thermoplastische Stärken sind auch aus der beiliegenden Abbildung 5 ersichtlich.

Erfindungsgemäß vorgesehen ist auch ein Compound enthaltend eine solche erfindungsgemäß hergestellte thermoplastische Stärke, extrudiert mit mindestens einem thermoplastischen Polymer. Dadurch werden eine Erhöhung des biobasierten und biologisch abbaubaren Anteils, sowie die Einstellung der Compound-Duktilität durch den TPS-Anteil ermöglicht. Compounds dieser Art können direkt zur Weiterverarbeitung z.B. an der Folienanlage eingesetzt werden.

Vorzugsweise enthält ein derartiges Compound als thermoplastisches Polymer ein Polymer ausgewählt aus der Gruppe umfassend Polyolefine, Polyamide, Polyurethane, Polyester und Mischungen hiervon. Bevorzugt enthält das Compound als thermoplastisches Polymer Polyester, welche aufgrund ihrer Viskositäten gut mit der TPS mischbar sind. Die Einstellung der Compoundeigenschaften, wie z.B. der Festigkeit, ist über die Polymermischung möglich, überraschenderweise ist es mit der erfindungsgemäß hergestellten thermoplastischen Stärke möglich, einen TPS Gehalt im Compound von bis zu 55 Gew. % vorzusehen.

Wie bereits ausgeführt ist die erfindungsgemäß hergestellte TPS bzw. ein eine solche TPS enthaltendes Compound besonders günstig zur Herstellung einer Folie durch Blas- bzw. Flachfolienextrusion. Überraschenderweise hat sich gezeigt, dass bei der Herstellung einer solchen Folie, das bei Verwendung einer aus dem Stand der Technik bekannten TPS praktisch unvermeidliche Rauchen nicht mehr auftritt.

Die oben genannten Mischungen mit ihren einzelnen Komponenten werden unter Temperatur und Schereinwirkung im Extruder zu einer thermoplastischen Schmelze verarbeitet.

Die vorliegende Erfindung wird nun anhand der nachfolgenden Beispiele näher erläutert.

**Tabelle 1: Werkstoffkennwerte von Folienmaterialien auf der Basis von TPS und dem Polyester Ecoflex der BASF, DE (compoundiert 1:1), wobei im Falle der TPS unterschiedliche Weichmacher in vergleichbaren Mengenanteilen (je 13 Gew. % der in der Tabelle angeführten Substanz in Kombination mit 4 Gew. % Sorbitol fest) zum Einsatz kamen**

| Weichmacher | Zugfestigkeit (MPa) | Dehnbarkeit (%) | Weiterreißfestigkeit (N/mm) |
|---|---|---|---|
| Glycerol | 10,5 | 540,0 | 87 |
| Xylitol | 14,1 | 155,0 | 78 |
| Sorbitol | 12,0 | 56,0 | 62 |
| Isosorbid | 9,2 | 31,0 | 59 |

Sowohl bei den in Tabelle 1 genannten Vergleichsbeispielen als auch bei den nachfolgenden erfindungsgemäßen Beispielen wurde native Stärke (Native Maisstärke, Maisita 21000) mit einem Weichmacher (10-25 Gew. %), Säure (0,1-1 Gew. %) sowie, natürlich nur bei den erfindungsgemäßen Beispielen, ein epoxidiertes Pflanzenöl (0,1-6 Gew. %) in einem einstufigen Extrusionsprozess gemischt, aufgeschlossen und plastifiziert. Dazu wurde die TPS in einem Doppelschneckenextruder mit Vakuumentgasung hergestellt, sämtliche Additive werden dem Extrusionsprozess über entsprechende Dosieraggregate direkt zugegeben. Die Verarbeitung erfolgt im Temperaturbereich zwischen 100 und 160 °C (ab 160 °C ist eine starke Braunfärbung zu erkennen).

Der Weichmacher kann dabei sowohl in fester, als auch in flüssiger Form vorgelegt werden, auch ist es möglich die Zugabe zu splitten (d.h. Zusatz teilweise in fester und teilweise in flüssiger Form). Die Ölkomponente wird unbehandelt in flüssiger/pumpbarer Form zugesetzt.

Aus der obigen Tabelle 1 ist ersichtlich, dass es durch den Einsatz anderer Weichmacher als Glycerin ohne den Zusatz von epoxidiertem Pflanzenöl zu Einbußen in den mechanischen Werkstoffeigenschaften kommt. Die ausschließliche Substitution von Glycerin durch Weichmacher wie z.B. Sorbitol, Isosorbid, oder Xylitol in einer TPS ist demnach nicht zielführend und führt im Falle von Folienmaterialien auf der Basis von TPS und Polymer erwiesenermaßen zu Einbußen in Hinblick auf die erzielbaren mechanischen Werkstoffeigenschaften.

Erst der erfindungsgemäß vorgesehene Zusatz von epoxidierten Pflanzenölen (z.B. epoxidiertes Leinöl (ELO), epoxidiertes Sonnenblumenöl, epoxidiertes Rapsöl oder epoxidiertes Sojabohnenöl (ESBO) sowie Mischungen hievon) führt, auch beim Einsatz von z.B. Sorbitol, zur Einbindung/Einmischung des Weichmachers in der TPS. Eine Verbesserung der Phasenverträglichkeit im Compound, durch die Integration der Ölkomponente in der TPS, führt in weiterer Folge zu einer Steigerung der mechanischen Werkstoffeigenschaften.

Die Aktivierung der Epoxidfunktionalität in den epoxidierten Pflanzenölen wird begünstigt durch den Zusatz von Säuren. Bevorzugt zum Einsatz kommen dabei Carbonsäuren (die im Idealfall auf nachhaltiger Basis hergestellt werden können) wie z.B. Zitronensäure, Weinsäure, Essigsäure, Itaconsäure, Äpfelsäure oder Milchsäure.

Weiters wird durch den Zusatz des epoxidierten Pflanzenöls eine Reduktion im Düsendruck und eine damit einhergehende Hemmung der beschriebenen Expansion erzielt (siehe dazu die beiliegende Abbildung, aus welcher die Vorteile des erfindungsgemäßen Verfahrens sogar schon optisch ersichtlich sind).

Als Nebeneffekt zum fakultativen Säurezusatz wird die Reduktion der relativen Molmasse der TPS beobachtet (Hydrolyse), was eine leichtere Fließfähigkeit (niedrigere Viskosität) bedingt und die Verarbeitbarkeit sowie die Mischbarkeit mit dem Polymer verbessert. Der Zusatz von Prozessadditiven zur Optimierung der Verarbeitbarkeit ist bis zu einem Anteil von 3 Gew. % zulässig (z.B. Fettsäuren wie Palmitinsäure, Myristinsäure, Stearinsäure oder Behensäure). Als Ausgangsrohstoffe können die definitionsgemäßen Stärketypen zum Einsatz kommen, beispielsweise mit einer Trockensubstanz von -90 Gew. %.

Die erfindungsgemäß hergestellten Extrudate sind für die Weiterverarbeitung zu Compounds (z.B. in Kombination mit Polyestern) geeignet. Erst auf Basis der Compounds ist es möglich, Endprodukte wie z.B. Folienmaterialien herzustellen.

In den nachfolgenden Beispielen A wird zunächst die Herstellung der TPS bzw. des Compounds beschrieben. Anschließend folgt in den Beispielen B1 bis B4 die Erklärung zur Weiterverarbeitung zu Blasfolien auf der Basis von TPS und Polyester.

### Beispiel A:

Als Ausgangsrohstoff wird Maisstärke mittels Feststoffdosierung in den Extruder eingebracht. Als Weichmacherkomponente wird Sorbitol (10-15 Gew. %) verwendet. Zur Verbesserung der Verarbeitbarkeit (Reduktion Drehmoment) wird Stearinsäure eingesetzt (1 Gew. %). Säure und epoxidierte Pflanzenöle umfassen Zitronensäure (0,1-0,5 Gew. %) und epoxidiertes Öl (3, 5 und >6 Gew. %). Die Mischung wird unter Verwendung eines Temperaturprofils im Bereich 100-130 °C und bei einer Drehzahl von 250 upm in einem Doppelschneckenextruder verarbeitet und an der Düsenplatte mittels Heißabschlag granuliert. Der entstandene Werkstoff ist wasserlöslich und kann als fein verteilte TPS (disperse Phase) über einen separaten Extrusionsschritt in z.B. Polyesterschmelzen (kontinuierliche Phase) eingearbeitet werden.

Die thermoplastische Stärke aus Beispiel A1 wird zusammen mit Polybutylenadipatterephthalat (PBAT) als Polyester im Verhältnis 1:1 in einem Doppelschneckenextruder compoundiert.

### Lieferanten:

Sorbitol, Glycerol, Stearinsäure - Brenntag, AT
ELO, ESBO - Hobum, AT
Zitronensäure - Jungbunzlauer, AT

### Maschinentypen:

Extrusion (TPS und Compound): Theysson TSK 30, 28D, 7 Zonen
Blasfolienanlage: OCS BFT400V3

**Tabelle 2: A1 - Einfluss der zugesetzten ELO Menge bei einem erfindungsgemäßen Produkt mit einem Weichmachergehalt von 13 Gew. % (Sorbitol) mit 0,1 Gew. % Zitronensäure**

| ELO (Gew. %) | Polarisationskreuze | Molmasse (kDa) | Partikel (µm) |
|---|---|---|---|
| 0 | 0 | 1850 | 0,8 |
| 3 | 0 | 1070 | 1,4 |
| 5 | 7 | 1270 | 5,4 |
| >6 | 8 | 1310 | 11,7 |

Erkennbar ist, dass der Aufschluss bei höheren ELO Konzentrationen beeinträchtigt wird. Bei einem ELO Gehalt ab 6 Gew. % konnte eine Sättigung des Systems beobachtet werden (öliger Film an den Extrudaten). Durch eine Reduktion in der Schwerwirkung aufgrund des ELO-Zusatzes nimmt die Größe der dispergierten TPS Partikel zu.
Abbildung 2 zeigt 100-fach vergrößert die Polarisation bei 3, 5 und 6 % ELO.

**Tabelle 3: A2 - Einfluss der zugesetzten Sorbitol Menge bei einem erfindungsgemäßen Produkt bei einem ELO Gehalt von 3 Gew. % mit 0,1 Gew. % Zitronensäure**

| Sorbitol (Gew. %) | Polarisationskreuze | Molmasse (kDa) | Partikel (µm) |
|---|---|---|---|
| 13 | 0 | 1070 | 1,4 |
| 14 | 0 | 1340 | 3,5 |
| 15 | 0 | 1490 | 1,4 |

Eine Steigerung im Weichmacheranteil bewirkt eine Zunahme in der relativen Molmasse.

**Tabelle 4: A3 - Einfluss der zugesetzten ESBO Menge bei einem erfindungsgemäßen Produkt bei einem Weichmachergehalt von 15 Gew. % (Sorbitol) mit 0,1 % Zitronensäure**

| ESBO (Gew. %) | Polarisationskreuze | Molmasse (kDa) | Partikel (µm) |
|---|---|---|---|
| 0 | 0 | 2040 | 0.5 |
| 3 | 0 | 809 | 1 |
| 5 | 0 | 832 | 1.1 |
| 6 | 0 (aber sphärische Strukturen erkennbar) | 938 | 1.5 |

In Hinblick auf die relative Molekülmasse ergibt, sowohl der Zusatz von ELO als auch von ESBO, bei niedrigen Ölkonzentrationen eine signifikante Reduktion. Der Effekt nimmt mit zunehmendem Ölanteil ab. Die TPS-Partikelgröße nimmt mit steigender Ölkonzentration zu. Bei 6 Gew. % Ölzusatz wurde in beiden Fällen eine ölige Oberfläche der Extrudate beobachtet. Somit konnte das Additiv nicht in der Matrix eingebunden werden - das System zeigte klare Anzeichen der Sättigung. Auf die Folienverarbeitung dieser TPS Varianten wurde daher verzichtet. Die Abbildung 3 zeigt 100-fach vergrößert die Polarisation bei 3, 5 und 6% ESBO.

**Tabelle 5: A4 - Einfluss der zugesetzten Zitronensäure (ZS) Menge bei einem erfindungsgemäßen Produkt bei einem Weichmachergehalt von 15 Gew. % (Sorbitol) mit ELO/ESBO (3 Gew. %)**

| ELO | | | |
|---|---|---|---|
| ZS (Gew. %) | Polarisationskreuze | Molmasse (kDa) | Partikel (µm) |
| 0 | 2 | 1370 | 1,3 |
| 0.1 | 0 | 1490 | 1,4 |
| 0.5 | 0 | 578 | 0,9 |

| ESBO | | | |
|---|---|---|---|
| ZS (Gew. %) | Polarisationskreuze | Molmasse (kDa) | Partikel (µm) |
| 0 | 2 | 978 | 1,7 |
| 0.1 | 0 | 809 | 1 |
| 0.5 | 0 | 564 | 1 |

Mit dem Säurezusatz von 0,5 Gew. % konnte eine signifikante Reduktion in der relativen Molekülmasse der TPS beobachtet werden.

### Beispiel B:

Auf der Versuchsreihe "A" aufbauend erfolgt die Herstellung von Blasfolien bei einer Verarbeitungstemperatur von 170 °C. Im Zuge dessen wurde das Drehmoment am Folienextruder als wichtiges Kriterium für die Verarbeitbarkeit mit aufgezeichnet.

**Tabelle 6: Compoundierung der Muster A1 - ALLE NICHT RAUCHEND**

| ELO (Gew. %) | Drehmoment (Nm) | Zugfestigkeit (MPa) | Dehnbarkeit (%) |
|---|---|---|---|
| 0 | 129 | 7,4 | 87 |
| 3 | 110 | 20,8 | 210 |
| 5 | 106 | 12,8 | 246 |

Im Zusammenhang mit der Verwendung von Sorbitol als Weichmacher wird darauf hingewiesen, dass dieses bei der Blasfolienverarbeitung generell nicht raucht, die Materialien auf der Basis von Sorbitol zeigen allerdings schlechte mechanische Werkstoffeigenschaften die durch den Zusatz von ELO allerdings signifikant verbessert werden können.

**Tabelle 7: Compoundierung der Muster A2 - ALLE NICHT RAUCHEND**

| Sorbitol (Gew. %) | Drehmoment (Nm) | Zugfestigkeit (MPa) | Dehnbarkeit (%) |
|---|---|---|---|
| 13 | 110 | 20,8 | 210 |
| 14 | 107 | 15,2 | 186 |
| 15 | 114 | 14,5 | 405 |

**Tabelle 8: Compoundierung der Muster A3 - ALLE NICHT RAUCHEND - 15% Sorbitol**

| ESBO (Gew. %) | Drehmoment (Nm) | Zugfestigkeit (MPa) | Dehnbarkeit (%) |
|---|---|---|---|
| 0 | 138 | 12,3 | 78 |
| 3 | 129 | 11,7 | 307 |
| 5 | 120 | 10,6 | 324 |

**Tabelle 9: Compoundierung der Muster A4 - ALLE NICHT RAUCHEND - 15% Sorbitol**

| ZS/ELO (Gew. %) | Drehmoment (Nm) | Zugfestigkeit (MPa) | Dehnbarkeit (%) |
|---|---|---|---|
| 0 | 175 | 18,8 | 250,5 |
| 0.1 | 114 | 14,5 | 405,0 |
| 0.5 | 108 | 17,2 | 220,7 |

| ZS/ESBO (Gew. %) | Drehmoment (Nm) | Zugfestigkeit (MPa) | Dehnbarkeit (%) |
|---|---|---|---|
| 0 | 154 | 13,6 | 156,0 |
| 0.1 | 129 | 11,7 | 307,0 |
| 0.5 | 116 | 18,8 | 247,1 |

### Zusätzliche Versuche mit Glycerol:

**Tabelle 10: C1 - Einfluss der zugesetzten ELO Menge bei einem erfindungsgemäßen Produkt bei einem Weichmachergehalt von 17,0 Gew. % (13,0 Gew. % Glycerol, Sorbitol fest 4 Gew. %) mit 0,1 Gew. % Zitronensäure**

| ELO (Gew. %) | Polarisationskreuze | Molmasse (kDa) | Partikel (µm) |
|---|---|---|---|
| 0 | 0 | 419 | 5,5 |
| 3 | 0 | 711 | 3,1 |
| 5 | 1 | 752 | 4,0 |
| 6 | 3 (aber sphärische Strukturen erkennbar) | 767 | 4,6 |

Wie die Ergebnisse der obigen Tab. 8 zeigen, kommt es für das erfindungsgemäße Produkt beim Einsatz von Glycerol nicht zu den Effekten wie sie für eine Kombination mit reinem Sorbitol beschrieben werden. Die Molmasse nimmt bereits ohne den Zusatz von ELO niedrigere Werte an. Die Feinheit der Dispersion der TPS in der Polyestermatrix wird durch ELO kaum beeinflusst. Die Sättigung des Systems zeigt sich auch wieder bei einem ELO Zusatz von 6 Gew. % durch eine ölige Oberfläche der Extrudate.

**Tabelle 11: Compoundierung der Muster C1 - ALLE RAUCHEND**

| ELO (Gew. %) | Drehmoment (Nm) | Zugfestigkeit (MPa) | Dehnbarkeit (%) |
|---|---|---|---|
| 0 | 97 | 10,5 | 540,0 |
| 3 | 91 | 9,1 | 411,7 |
| 5 | 89 | 9,8 | 410,1 |

TPS auf der Basis von Glycerol zeigt trotz des Zusatzes von ELO ein starkes Rauchen bei der Blasfolienverarbeitung.

Weiters war nach ELO Zusatz keine Verbesserung der Materialfestigkeit erkennbar. Die Dehnbarkeiten von hergestellten Folien hingegen nahmen schon ohne ELO sehr hohe Werte an.

### Analysemethoden:

Überprüfung des Stärkeaufschlusses der TPS (Ziel: Überführung der granulären Stärke in eine homogene Schmelze): Liegt eine unvermahlene Probe vor, so muss diese vorher mit einer Labormühle möglichst fein vermahlen werden. Außerdem ist darauf zu achten, dass bereits vermahlene Muster noch nicht zu lange stehen sollten, da diese schnell Feuchtigkeit anziehen und somit das Ergebnis der Trockensubstanz verfälscht wird. Nun wird die Trockensubstanz ermittelt. In Anschluss daran wird die vermahlene TPS 5,0 Gew %ig in Trockensubstanz eingerührt. Das Deionat wird dabei im Becherglas vorgelegt und die Probe unter Rühren vorsichtig eingestreut. Das Gesamtgewicht (Probe + Deionat) beträgt 200 g.

Einscherparameter: 5 Minuten bei 1000 UpM mit einem 4cm Zahnscheibenrührer.

Zur Analyse werden nun zwei Tropfen der gut aufgeschlämmten Probe mittels Pasteurpipette auf einen Objektträger aufgebracht und unter dem Durchlichtmikroskop mit und ohne Polarisationsfilter untersucht.

Bestimmung der relativen Molekülmasse mittels Gelpermeationschromatographie:
Bei kaltwasserlöslichen Stärken wird das Wasser vorgelegt und die Stärke eingerührt. Es werden 0,75 g Stärke in TS (genaues Gewicht notieren) in ca. 30 ml Reinstwasser eingerührt. Erst wenn die Stärke vollständig gequollen (gelöst) ist, kann fortgefahren werden. Danach wird mit Salzsäure (0,1 N / 1N) oder mit NaOH-Lösung (0,1 N / 1N) der pH-Wert auf pH 7 ± 0,5 eingestellt. Die neutralisierte Lösung wird nun quantitativ in einen 100 ml Messkolben überführt und bis zur Marke mit Reinstwasser aufgefüllt. Anschließend werden je 2 ml der Proben in ein 15 ml Supelco-Röhrchen gefüllt, mit 3 ml DMSO und einem Magnetrührstäbchen versetzt und 60 Min. auf ca. 100-105 °C erhitzt und anschließend unter Rühren auf RT abgekühlt. Nach dem Abkühlen werden ca. 1 ml der Proben über ein 1 µm Puradisc 25GD Disposable Filter der Fa. Whatman (Glasfaserfilter) in ein 1,5 ml Analysenröhrchen filtriert und dicht verschlossen. Die Lösung muss dünnflüssig, klar und homogen sein, d.h. es dürfen keine "Clusters" sichtbar sein. Proben, die nach dem Filtrieren noch trüb sind oder die sich extrem schwer filtrieren lassen, können für 10 Minuten bei 13.000 rpm in der Eppendorf Zentrifuge zentrifugiert werden

### Einarbeitung der TPS in die Polymer-Matrix:

Einige Granulate des zu untersuchenden Compounds werden kurz in flüssigen Stickstoff getaucht, in Backpapier eingefaltet und mit einem Hammer vorsichtig in Bruchstücke zerschlagen. Die Granulatfraktionen werden in ein Becherglas überführt, mit 1 M HCL überschichtet und für 3 Stunden am Magnetrührer gerührt. Danach wird über einen Faltenfilter die Salzsäure abgetrennt und die von Stärke ausgelösten Compounds werden vor dem Trocknen 2-3 Mal mit Deionat abgespült. Die feuchten Compoundfraktionen werden auf eine Petrischale gestreut und im Trockenschrank bei 60°C eine Stunde getrocknet. Die getrockneten Kryobrüche können nun mittels Elektronenmikroskop untersucht werden.

### Bewertung des Rauchverhaltens:

Optisch: Die Bewertung hinsichtlich rauchend/nicht rauchend kann an der Blasfolienanlage gemäß Abbildung 4 mittels optischer Begutachtung erfolgen. Im Falle der Bewertung mit "rauchend" ist am Folienschlauch die Entwicklung von "Nebelschwaden" ersichtlich (vergleiche Abbildung 4).

Analytisch: Die fein vermahlene Probe wird in Hinblick auf das Rauchverhalten mittels Gaschromatographie (Headspace-Technik) analysiert. Im Zuge der Untersuchung erfolgt ein sukzessives Erwärmen der Probe im Verarbeitungsbereich und über diesen hinaus. Das Rauchverhalten wird mittels Massenspektrometrie sowohl qualitativ als auch quantitativ bewertet. Ist nach einer Messdauer von 5 Minuten ein Masseverlust von > 20 µg/mg Probe erkennbar so erfolgt die Bewertung mit "rauchend".

### Bestimmung der mechanischen Werkstoffeigenschaften:

Nach EN ISO 527-1/-2

### Bestimmung der Schüttdichte:

"lose Schüttdichte", ermittelt durch lockeres Befüllen eines 100 ml Messzylinders Spezifikationsfenster: 70-85 g/100ml
Stärkeaufschluss: <10 Polarisationskreuze (bevorzugt keine Polarisationskreuze ersichtlich)
Molmasse TPS: Mw = 500-2000 kDa (bevorzugt zwischen 900 und 1600, noch besser zwischen 1000 und 1500)
Dispersion im Compound: bevorzugt <5 µm (<20 µm - Foliengängig aber schlechte Haptik, <10 µm - Foliengängig aber Mikrorauigkeit vorhanden).

Die überlegenen Werkstoffeigenschaften von aus erfindungsgemäß hergestellten TPS bzw. Compound produzierten Folien zeigen sich in einer Dehnbarkeit: >300 % bei einer Zugfestigkeit von >10 MPa - Eingesetzt werden kann ein TPS Gehalt von 50 Gew. % und darüber (für die Versuche wurde ein TPS-Gehalt von 50 Gew. % herangezogen).

## Patentansprüche

1. Verfahren zur Herstellung von thermoplastischer Stärke, wobei eine Mischung umfassend Stärke und ein Polyol, vorzugsweise ausgewählt aus der Gruppe umfassend Polyethylenglykol, Monosacchariden, Zuckeralkoholen wie Glyceriol Sorbitol, Erythritol, Xylitol oder Mannitol und Mischungen hiervon, in einer Menge von 10 bis 25 Gew. % der Mischung und einem Epoxid, ausgewählt aus der Gruppe umfassend epoxidierte Pflanzenöle wie Sojabohnenöl, Leinöl, Sonnenblumenöl, Rapsöl und Mischungen hiervon, in einer Menge von 0,1 bis 6, bevorzugt 1 bis 4,5, besonders bevorzugt 2,5 bis 3,5 Gew. % der Mischung extrudiert wird, **dadurch gekennzeichnet, dass** die Mischung weiters eine Säure, vorzugsweise eine Carbonsäure ausgewählt aus der Gruppe bestehend aus Zitronensäure, Äpfelsäure oder Weinsäure, in einer Menge von 0,1 bis 1, vorzugsweise 0,1 bis 0,5 Gew. % der Mischung enthält.

2. Verfahren nach Anspruch 1, **dadurch gekennzeichnet, dass** die Mischung ein Polyol ausgewählt aus der Gruppe bestehend aus Sorbitol, Erythritol, Xylitol, Mannitol und Mischungen hiervon, in einer Menge von 10 bis 15 Gew. % enthält.

3. Verfahren nach einem der Ansprüche 1 oder 2, **dadurch gekennzeichnet, dass** die Mischung als Polyol Sorbitol oder Eryithritol in einer Menge von 10 bis 15 Gew. % enthält.

4. Verfahren nach einem der Ansprüche 1 bis 3, **dadurch gekennzeichnet, dass** die Mischung das Polyol in einer Menge von 13 bis 15 Gew. % enthält.

5. Verfahren nach einem der Ansprüche 1 bis 4, **dadurch gekennzeichnet, dass** die Mischung Epoxid zu Polyol in einem Verhältnis von 1 zu 2 bis 1 zu 8, vorzugsweise 1 zu 4 bis 1 zu 6, besonders bevorzugt 1 zu 5, enthält.

6. Verfahren nach einem der Ansprüche 1 bis 5, **dadurch gekennzeichnet, dass** die Mischung zusätzlich Milchsäure in einer Menge von 2 bis 9, vorzugsweise 4 bis 7, besonders bevorzugt 3,5 bis 4,5 Gew. % der Mischung enthält.

7. Verfahren nach einem der Ansprüche 1 bis 6, **dadurch gekennzeichnet, dass** die Mischung bei einer Temperatur von 100-175 °C extrudiert wird, vorzugsweise in einem Doppelschneckenextruder mit separater Vakuumzone in der die Entgasung durch Anlegen von Unterdruck erfolgt.

8. Thermoplastische Stärke, erhältlich nach einem Verfahren nach einem der Ansprüche 1 bis 7.

9. Thermoplastische Stärke nach Anspruch 8, welche eine Schüttdichte von 70 bis 85 g/100 ml aufweist.

10. Compound enthaltend eine thermoplastische Stärke nach einem der Ansprüche 8 oder 9 extrudiert mit mindestens einem thermoplastischen Polymer.

11. Compound nach Anspruch 10, **dadurch gekennzeichnet** das das thermoplastische Polymer ausgewählt ist aus der Gruppe umfassend Polyolefine, Polyamide, Polyurethane, Polyester und Mischungen hiervon.

12. Folie, hergestellt durch Blas- bzw. Flachfolienextrusion eines Compounds nach einem der Ansprüche 10 oder 11.

## Claims

1. A method for the producing thermoplastic starch, in which a mixture comprising starch and a polyol, preferably selected from the group comprising polyethylene glycol, monosaccharides, sugar alcohols such as glycerol, sorbitol, erythritol, xylitol or mannitol and mixtures thereof, in a quantity of between 10 and 25 wt.% of the mixture, and an epoxide selected from the group comprising epoxidised plant oils such as soybean oil, linseed oil, sunflower oil, rapeseed oil and mixtures thereof, in a quantity of between 0.1 and 6, preferably between 1 and 4.5, particularly preferably between 2.5 and 3.5 wt.% of the mixture, is extruded, **characterised in that** the mixture further contains an acid, preferably a carboxylic acid selected from the group consisting of citric acid, malic acid or tartaric acid, in a quantity of between 0.1 and 1, preferably between 0.1 and 0.5 wt.% of the mixture.

2. The method according to claim 1, **characterised in that** the mixture contains a polyol selected from the group consisting of sorbitol, erythritol, xylitol, mannitol and mixtures thereof, in a quantity of 10 to 15 wt.%.

3. The method according to either one of claims 1 or 2, **characterised in that** the mixture contains sorbitol or erythritol as polyol, in a quantity of 10 to 15 wt.%.

4. The method according to one of claims 1 to 3, **characterised in that** the mixture contains the polyol in a quantity of 13 to 15 wt.%.

5. The method according to any one of claims 1 to 4, **characterised in that** the mixture contains epoxide to polyol in a ratio of 1:2 to 1:8, preferably 1:4 to 1:6, particularly preferably 1:5.

6. The method according to any one of claims 1 to 5, **characterised in that** the mixture additionally contains lactic acid in a quantity of 2 to 9, preferably 4 to 7, particularly preferably 3.5 to 4.5 wt.% of the mixture.

7. The method according to any one of claims 1 to 6, **characterised in that** the mixture is extruded at a temperature of 100-175°C, preferably in a twin-screw extruder with a separate vacuum zone in which degassing takes place by application of a vacuum.

8. A thermoplastic starch obtainable by a method according to any one of claims 1 to 7.

9. The thermoplastic starch according to claim 8, which has a bulk density of 70 to 85 g/100 ml.

10. A compound containing a thermoplastic starch according to any one of claims 8 or 9 extruded with at least one thermoplastic polymer.

11. The compound according to claim 10, **characterised in that** the thermoplastic polymer is selected from the group comprising polyolefins, polyamides, polyurethanes, polyesters and mixtures thereof.

12. A film produced by blown or flat film extrusion of a compound according to either one of claims 10 or 11.

## Revendications

1. Procédé pour la préparation d'amidon thermoplastique, dans lequel un mélange comportant de l'amidon et un polyol, de préférence sélectionné dans le groupe comprenant le polyéthylène glycol, les monosaccharides, les alcools de sucre tels que le glycérol, le sorbitol, l'érythritol, le xylitol ou le mannitol et des mélanges de ceux-ci, en une quantité de 10 à 25 % en poids du mélange et un époxyde, choisi dans le groupe comprenant des huiles végétales époxydées telles que l'huile de germes de soja, l'huile de lin, l'huile de tournesol, l'huile de colza et des mélanges de celles-ci, en une quantité de 0,1 à 6, de préférence 1 à 4,5, plus particulièrement 2,5 à 3,5 % en poids du mélange est extrudé, **caractérisé en ce que** le mélange contient en outre un acide, de préférence un acide carboxylique choisi dans le groupe constitué par l'acide citrique, l'acide malique ou l'acide tartrique, en une quantité de 0,1 à 1, de préférence 0,1 à 0,5 % en poids du mélange.

2. Procédé selon la revendication 1, **caractérisé en ce que** le mélange est un polyol choisi dans le groupe constitué par le sorbitol, l'érythritol, le xylitol, le mannitol et des mélanges de ceux-ci, en une quantité de 10 à 15 % en poids.

3. Procédé selon l'une quelconque des revendications 1 ou 2, **caractérisé en ce que** le mélange contient en tant que polyol le sorbitol ou l'éryithritol en une quantité de 10 à 15 % en poids.

4. Procédé selon l'une quelconque des revendications 1 ou 3, **caractérisé en ce que** le mélange contient le polyol en une quantité de 13 à 15 % en poids.

5. Procédé selon l'une quelconque des revendications 1 à 4, **caractérisé en ce que** le mélange contient l'époxyde sur le polyol dans un rapport de 1 sur 2 à 1 sur 8, de préférence 1 sur 4 à 1 sur 6, plus particulièrement 1 sur 5.

6. Procédé selon l'une quelconque des revendications 1 à 5, **caractérisé en ce que** le mélange contient en plus de l'acide lactique en une quantité de 2 à 9, de préférence 4 à 7, de manière particulièrement préférée 3,5 à 4,5 % en poids du mélange.

7. Procédé selon l'une quelconque des revendications 1 à 6, **caractérisé en ce que** le mélange est extrudé à une température de 100-175 °C, de préférence dans une extrudeuse bi-vis avec une zone de vide séparée dans laquelle le dégazage s'effectue par application d'une dépression.

8. Amidon thermoplastique, pouvant être obtenu selon un procédé selon l'une quelconque des revendications 1 à 7.

9. Amidon thermoplastique selon la revendication 8, lequel présente une densité apparente de 70 à 85 g/100 ml.

10. Composé contenant un amidon thermoplastique selon l'une quelconque des revendications 8 ou 9 extrudé avec au moins un polymère thermoplastique.

11. Composé selon la revendication 10, **caractérisé en ce que** le polymère thermoplastique est choisi dans le groupe comprenant les polyoléfines, polyamides, polyuréthanes, polyesters et mélanges de ceux-ci.

12. Feuille, fabriquée par extrusion soufflage de gaine ou de film plat d'un composé selon l'une quelconque des revendications 10 ou 11.
